# EUROPÄISCHE PATENTANMELDUNG

(11) **EP 3 395 730 A1**
(43) Veröffentlichungstag der Anmeldung: **31.10.2018**
(21) Anmeldenummer: 17020178.4
(22) Anmeldetag: 27.04.2017
(51) Int. Cl.: B65G 47/84, B65G 47/32, B65G 47/29

(54) **BEARBEITUNGSVORRICHTUNG UND VERFAHREN ZUM BEARBEITEN VON VEREINZELTEN PACKUNGEN**

(71) Anmelder: SIG Technology AG, 8212 Neuhausen am Rheinfall (CH)
(72) Erfinder: WEBER, Daniel, 8207 Schaffhausen (CH)
(74) Vertreter: Cohausz & Florack

(57) **Zusammenfassung**

Beschrieben und dargestellt ist eine Bearbeitungsvorrichtung (1) zum Bearbeiten von, vorzugsweise gefüllten und geschlossenen, Packungen (5), insbesondere Karton-Verbundpackungen, mit einer Bearbeitungsstation zum Bearbeiten der Packungen (5), vorzugsweise zum Formen der Packungen (5) und/oder zum Applizieren von Packhilfsmitteln an diesen Packungen (5), mit einer Transporteinrichtung (3) zum Zuführen von, insbesondere aufgestauten, Packungen (5) entlang eines Zuführpfads (6) und zum Weitertransport von vereinzelten Packungen (5) in Richtung der Bearbeitungsstation entlang eines Weitergabepfads (7) und mit einer Vereinzelungseinrichtung (2) zum Vereinzeln der über die Transporteinrichtung (3) zugeführten Packungen (5), wobei die Vereinzelungseinrichtung (2) mehrere jeweils entlang einer gemeinsamen geschlossenen Transportbahn umlaufende und entlang der Transportbahn verteilt angeordnete Schiebemittel (18) zum formschlüssigen Verschieben der Packungen (5) vom Zuführpfad (6) auf den Weitergabepfad (7) wenigstens im Wesentlichen quer zum Zuführpfad (6) und/oder Weitergabepfad (7) im Bereich der Vereinzelungseinrichtung (2) aufweist. Damit ein zuverlässiger Betrieb der Bearbeitungsvorrichtung bei gleichzeitig höheren Verarbeitungsgeschwindigkeiten erreicht werden kann, ist vorgesehen, dass die Schiebemittel (18) an zwei in vertikaler Richtung voneinander beabstandeten und um jeweils eine Drehachse (19,20) drehbaren Drehtellern (16,17) montiert sind und dass die Drehachsen (19,20) der Drehteller (16,17) parallel zueinander ausgerichtet und horizontal voneinander beabstandet angeordnet sind.

## Beschreibung

Die Erfindung betrifft eine Bearbeitungsvorrichtung zum Bearbeiten von, vorzugsweise gefüllten und geschlossenen, Packungen, insbesondere Karton-Verbundpackungen, mit einer Bearbeitungsstation zum Bearbeiten der Packungen, vorzugsweise zum Formen der Packungen und/oder zum Applizieren von Packhilfsmitteln an die Packungen, mit einer Transporteinrichtung zum Zuführen von, insbesondere aufgestauten, Packungen entlang eines Zuführpfads und zum Weitertransport von vereinzelten Packungen in Richtung der Bearbeitungsstation entlang eines Weitergabepfads und mit einer Vereinzelungseinrichtung zum Vereinzeln der über die Transporteinrichtung zugeführten Packungen, wobei die Vereinzelungseinrichtung mehrere jeweils entlang einer gemeinsamen geschlossenen Transportbahn umlaufende und entlang der Transportbahn verteilt angeordnete Schiebemittel zum formschlüssigen Verschieben der Packungen vom Zuführpfad auf den Weitergabepfad wenigstens im Wesentlichen quer zum Zuführpfad und/oder Weitergabepfad im Bereich der Vereinzelungseinrichtung aufweist. Ferner betrifft die Erfindung ein Verfahren zum Bearbeiten von, vorzugsweise gefüllten und geschlossenen, Packungen, insbesondere Karton-Verbundpackungen.

Bearbeitungsvorrichtungen zum Bearbeiten von Packungen sind in unterschiedlichen Ausgestaltungen bekannt, wobei die Packungen durch die Verpackung und das darin aufgenommene Packgut gebildet werden. Als Verpackung kommen dabei beispielsweise Flaschen, Schlauchbeutel, Dosen etc. infrage. Die Bearbeitungsvorrichtungen dienen zudem vornehmlich dem Bearbeiten von bereits gefüllten und verschlossenen Packungen, an denen beispielsweise Packhilfsmittel, wie Strohhalme, die auch als Trinkhalme bezeichnet werden, wiederverschließbare Ausgieß- und/oder Öffnungselemente, Aufreißlaschen, die auch als Pull-tabs bezeichnet werden, Etiketten oder dergleichen, appliziert werden sollen. Alternativ oder zusätzlich kann die Bearbeitungsvorrichtung bei bestimmten Packunegn aber auch dem Formen der Packungen dienen, so dass die Packungen eine gewünschte, insbesondere ansprechende, endgültige Form annehmen. Die Bearbeitungsvorrichtungen sind dann bedarfsweise als sogenannte Formstationen ausgebildet, in denen Presswerkzeuge zum Einsatz kommen, um den Packungen die gewünschte Form "aufzuprägen". Weitere Bearbeitungsschritte sind denkbar.

Bei den vorliegenden Packungen handelt es sich vornehmlich um Verbundpackungen, die alternativ zu beispielsweise Flaschen oder Dosen verwendet werden. Entsprechende Verpackungen werden meist in einer sogenannten Füllmaschine mit dem Packgut gefüllt und verschlossen, die bei Karton-Verbundpackungen nicht selten in Anlehnung an ihre Hauptfunktionen, nämlich das Formen der Verpackung, das Füllen der Verpackung und das Siegeln der Verpackung, auch als Form-/Fill-/Seal-Maschinen bezeichnet werden.

Als Packgut kommen insbesondere fließfähige, also flüssige oder wenigstens pastöse, Packgüter infrage, die bedarfsweise noch stückige Anteile aufweisen können. Trockene und rieselfähige Packgüter sind nicht ausgeschlossen, spielen in der Praxis aber keine bedeutende Rolle. Vielfach sind in den Packungen Lebensmittel aufgenommen, wie Getränke, insbesondere Milch, Säfte, Nektare, Molkereiprodukte, und Suppen. Im Falle von Getränken werden die Karton-Verbundpackungen auch als Getränkekarton-Verbundpackungen bezeichnet.

Verbundpackungen sind aus miteinander verbundenen Packstoffen gebildet, die einen flächigen Schichtaufbau, das sogenannte Packungslaminat bilden. Karton-Verbundpackungen haben eine Kartonschicht, die der Packung Stabilität verleiht und als Trägerschicht für zu beiden Seiten der Kartonschicht angeordnete Kunststoffschichten dienen kann. Kunststoffschichten dienen beispielsweise als Flüssigkeitssperre. So wird beispielsweise das Eindringen von fließfähigen Produkten in das Packungslaminat, insbesondere die Kartonschicht, oder gar das Auslaufen von fließfähigen Produkten ebenso vermieden, wie das Eindringen von Feuchtigkeit von außen. Ferner lassen sich thermoplastische Kunststoffe unter Ausbildung von stoffschlüssigen Siegelnähten siegeln, um so eine Verpackung zu formen und die Packung zu verschließen. Das Packungslaminat kann weitere Schichten und Packstoffe aufweisen, so stellt beispielsweise eine Aluminiumschicht eine Barrierewirkung gegen Gase und Licht bereit. Um das flächige Packungslaminat falzen, d.h. maschinell falten, zu können, werden oft Rillungen in das Packungslaminat eingebracht, welche die späteren Falzlinien vordefinieren. Die Falzungen bilden an der Packung die Packungskanten und/oder ermöglichen das Ausformen von Packungsboden und/oder Packungskopf. Packungslaminate sind zudem meist mit einem Dekor bedruckt.

Das Packungslaminat kann vor dem Formen der Verpackung zugeschnitten werden, wodurch sogenannte Zuschnitte erzeugt werden. Diese können zu sogenannten Packungsmantelrohlingen weiterverarbeitet werden. Dazu werden die Längsränder überaufeinandergelegt und unter Ausbildung einer Längssiegelnaht aufeinandergesiegelt. Man erhält so einen rohrförmigen Mantel bzw. einen sogenannten Packungsmantelrohling bzw. Packungssleeve. Alternativ kann das Packungslaminat als Endlosmaterial, insbesondere als Rollenware, bereitgestellt werden, aus dem, ohne zunächst einen Zuschnitt zu erzeugen, direkt eine Verpackung geformt werden kann.

Aus der WO 93/02923 A1 ist eine Bearbeitungsvorrichtung und ein entsprechendes Verfahren zum Applizieren von Packhilfsmitteln in Form von Ausgießern an gefüllte und verschlossene Packungen bekannt. Die Packungen werden dabei der Reihe nach über ein Transportband einer Transporteinrichtung entlang eines in gerader Linie ausgerichteten Zuführpfads einer Vereinzelungseinrichtung zugeführt und vor der Vereinzelungseinrichtung entlang des Zuführpfads aufgestaut. Die Vereinzelungseinrichtung umfasst entlang einer geschlossenen Transportbahn verteilt angeordnete Schiebemittel. Während die Schiebemittel entlang der geschlossenen Transportbahn umlaufen, drücken die Schiebemittel nacheinander seitlich gegen die aufgestauten und mithin zu vereinzelnden Packungen, wodurch die Packungen quer zum Zuführpfad der Packungen auf ein weiteres Transportband der Transporteinrichtung geschoben werden, das die vereinzelten Packungen entlang eines geradlinigen Weitergabepfads an eine Bearbeitungsstation der Bearbeitungsvorrichtung weitergibt. In der Bearbeitungsstation werden die Packhilfsmittel in Form von Ausgießern nacheinander an die vereinzelten Packungen appliziert.

Mit entsprechenden Bearbeitungsvorrichtungen sind jedoch nur begrenzte Verarbeitungsgeschwindigkeiten zu erreichen, da ansonsten ein zuverlässiger Betrieb nicht gewährleistet werden kann. Dies liegt insbesondere an den Anforderungen an das Packungshandling. Wenn die Förderung der Packungen nicht wie vorgesehen erfolgt, weil beispielsweise einzelne Packungen versehentlich verrutschen, wird der Betrieb der Bearbeitungsvorrichtung beeinträchtigt, so dass die Bearbeitungsvorrichtung bedarfsweise angehalten werden muss. Hinzu kommt, dass Packungen meist eine bezogen auf ihre Höhe geringe Standfläche aufweisen, weshalb Packungen üblicherweise zum Kippen neigen. Kippt eine Packungen beispielsweise beim Vereinzeln um, wird dies regelmäßig zu einem Produktionsstopp führen. Des Weiteren muss beim Packungshandling dafür Sorge getragen werden, dass das Dekor und die äußere Erscheinung der Packungen keinen Schaden nimmt.

Daher liegt der vorliegenden Erfindung die Aufgabe zugrunde, die Bearbeitungsvorrichtung und das Verfahren jeweils der eingangs genannten und zuvor näher erläuterten Art derart auszugestalten und weiterzubilden, dass ein zuverlässiger Betrieb der Bearbeitungsvorrichtung bei gleichzeitig höheren Verarbeitungsgeschwindigkeiten möglich wird.

Diese Aufgabe ist bei einer Bearbeitungsvorrichtung nach dem Oberbegriff des Anspruchs 1 dadurch gelöst, dass die Schiebemittel an zwei in vertikaler Richtung voneinander beabstandeten und um jeweils eine Drehachse drehbaren Drehtellern montiert sind und dass die Drehachsen der Drehteller parallel zueinander ausgerichtet und horizontal voneinander beabstandet angeordnet sind.

Die genannte Aufgabe ist darüber hinaus gemäß Anspruch 11 durch ein Verfahren zum Bearbeiten von, vorzugsweise gefüllten und geschlossenen, Packungen, insbesondre Karton-Verbundpackungen, gelöst,
- bei dem zu vereinzelnde, insbesondere aufgestaute, Packungen mit einer Transporteinrichtung entlang eines Zuführpfads einer Vereinzelungseinrichtung zugeführt und von der Vereinzelungseinrichtung entlang eines Weitergabepfads in Richtung einer Bearbeitungsstation weitertransportiert werden,
- bei dem die Packungen von der Vereinzelungseinrichtung mit in einer geschlossenen Transportbahn umlaufenden und entlang der Transportbahn verteilten Schiebemitteln formschlüssig von dem Zuführpfad auf den Weitergabepfad und wenigstens im Wesentlichen quer zum Zuführpfad und/oder Weitergabepfad im Bereich der Vereinzelungseinrichtung verschoben werden,
- bei dem zwei in vertikaler Richtung voneinander beabstandete und mit den Schiebemitteln verbundene Drehteller um parallel zueinander ausgerichtete und horizontal voneinander beabstandete Drehachsen gedreht werden und
- bei dem die vereinzelten Packungen in einer Bearbeitungsstation bearbeitet, insbesondere geformt oder mit Packhilfsmitteln versehen, werden.

Die Anordnung der Schiebemittel an zwei in vertikaler Richtung voneinander beabstandeten und um jeweils eine Drehachse drehbaren Drehtellern in der Weise, dass die Drehachsen der Drehteller parallel zueinander ausgerichtet und horizontal voneinander beabstandet angeordnet sind, ermöglicht eine sehr präzise Führung der Schiebemittel und zwar auch dann, wenn die Schiebemittel sehr schnell bewegt werden, um einen hohen Durchsatz an Packungen zu gewährleisten. Zudem lässt sich die Drehung der Drehteller sehr genau an die Bewegung der Transporteinrichtung zur Weitergabe der Packungen anpassen, so dass bedarfsweise ein durchgängig geführter Transport der Packungen gewährleistet ist, um Störungen des Betriebs zu verhindern.

Dabei können die Schiebemittel zwischen den Drehtellern angeordnet sein, so dass die Schiebemittel recht starr und/oder widerstandsfähig sein können. Dies dient nicht nur der Langlebigkeit der Vereinzelungseinrichtung, sondern auch der dauerhaft präzisen Führung der Schiebemittel entlang der umlaufenden Transportbahn. Die entsprechende Anordnung der Schiebemittel ermöglicht es zudem die Packungen auf einem recht kurzen Stück der Transporteinrichtung recht weit zur Seite zu schieben, was das Vereinzeln begünstigen kann, ohne dass dafür ein übermäßiger Bauraum erforderlich wäre. Darüber hinaus können Abnutzungserscheinungen reduziert werden, was den Wartungsbedarf herabsetzt.

Letztlich können Packungen, sehr einfach mit einer Vereinzelungseinrichtung vereinzelt und sodann vereinzelt an eine Bearbeitungsstation weitergegeben werden. Die bereits diskutierten Vorteile kommen dabei insbesondere dann zum Tragen, wenn es sich um eine gefüllte und geschlossene Packung, wie eine Karton-Verbundpackungen, handelt. Diese stellen nämlich besondere Anforderungen an das Packungshandling. Die zu vereinzelnden Packungen werden mit einer Transporteinrichtung entlang eines bedarfsweise geradlinig ausgebildeten Zuführpfads der Vereinzelungseinrichtung zugeführt. Die Packungen können sich dabei bereits in der Transportrichtung gesehen berühren oder vor der Vereinzelungseinrichtung aufgestaut werden. Die Vereinzelungseinrichtung weist dabei Schiebemittel auf, die entlang einer geschlossenen Transportbahn und daher endlos umlaufen. Um ein gleichmäßiges Vereinzeln der Packungen zu erreichen, bietet es sich an, wenn die Schiebemittel gleichmäßig entlang der geschlossenen Transportbahn verteilt angeordnet sind. Dies kann dazu führen, dass die Abstände zwischen benachbarten Schiebemitteln jeweils wenigstens im Wesentlichen konstant sind. Das Umlaufen der Schiebemittel entlang der geschlossenen Transportbahn wird einfach und zuverlässig dadurch erreicht, dass die Schiebemittel jeweils an zwei Drehtellern festgelegt sind. Die Drehteller sind dabei einerseits in vertikaler Richtung parallel zueinander ausgerichtet und in horizontaler Richtung versetzt zueinander angeordnet. Daher erstrecken sich die Drehachsen der Drehteller parallel und in horizontaler Richtung versetzt zueinander.

Die Drehung der Drehteller lässt die Schiebemittel endlos entlang einer geschlossenen Transportbahn umlaufen. Während die Schiebemittel entlang der Transportbahn umlaufen, schieben die Schiebemittel die zu vereinzelnden Packungen nacheinander formschlüssig zur Seite und vereinzeln die entsprechenden Packungen dadurch. Dabei gelangen die Packungen vom Zuführpfad auf einen Weitergabepfad entlang dem die vereinzelten Packungen über die Transporteinrichtung, bedarfsweise geradlinig, an eine Bearbeitungsstation weitergegeben werden. Die Packungen werden also weniger durch die Vereinzelungseinrichtung in der Transportrichtung beschleunigt, als vielmehr im Bereich der Vereinzelungseinrichtung quer zum Zuführpfad und/oder quer zum Weitergabepfad verschoben. Unter Umständen ist es ausreichend, wenn die Packungen von der Transporteinrichtung nur in Richtung der Bearbeitungsstation weitergegeben werden, wenn auf andere Weise sichergestellt ist, dass die Packungen zur Bearbeitungsstation gelangen. Den Transport der vereinzelten Packungen wird auch entlang des Weitergabepfads von derselben Transporteinrichtung, wenn auch nicht zwingend vom selben Transportmittel, bewerkstelligt. In der Bearbeitungsstation können die vereinzelten Packungen dann in der gewünschten Weise bearbeitet werden, wobei insbesondere ein Formen der Packungen, insbesondere der Karton-Verbundpackungen, oder ein Applizieren von Packhilfsmitteln, vorzugsweise in Form von Ausgießern oder in Form von, insbesondere umverpackten, Strohhalmen, infrage kommt.

Der besseren Verständlichkeit halber und zur Vermeidung unnötiger Wiederholungen werden nachfolgend die Bearbeitungsvorrichtung und das Verfahren gemeinsam beschrieben, ohne jeweils im Einzelnen zwischen der Bearbeitungsvorrichtung und dem Verfahren zu unterscheiden. Anhand des Kontextes ergibt sich jedoch für den Fachmann, welches Merkmal jeweils hinsichtlich der Bearbeitungsvorrichtung und hinsichtlich des Verfahrens bevorzugt ist.

Bei einer ersten besonders bevorzugten Ausgestaltung der Bearbeitungsvorrichtung sind die Schiebemittel gleichförmig über den Umfang wenigstens eines Drehtellers verteilt angeordnet. Dies vereinfacht den Betrieb der Bearbeitungsvorrichtung und erlaubt einen hohen Durchsatz an Packungen, ohne Betriebsstörungen befürchten zu müssen. Alternativ oder zusätzlich können die Schiebemittel biegesteif ausgebildet sein, so dass das seitliche Verschieben der Packungen vom Zuführpfad auf den Weitergabepfad unabhängig von der Art der Packungen in gleicher Weise definiert und zuverlässig erfolgen kann. Um das Verschieben definiert und zuverlässig ablaufen zu lassen, ohne dass dies versehentlich zu Beschädigungen an den Packungen führt, bietet es sich an, die Schiebemittel drehbar mit wenigstens einem Drehteller, insbesondere mit beiden Drehtellern zu verbinden.

Zur apparativen Vereinfachung der Bearbeitungsvorrichtung aber auch zum Steigern der Zuverlässigkeit des Verfahrens kann bedarfsweise nur ein Drehteller direkt über einen Antrieb angetrieben sein. Dieser Antrieb führt zu einem Drehen des entsprechenden Drehtellers, was den weiteren Drehteller zwangsweise antreibt und somit auch zu einem Drehen des weiteren Drehtellers führt. Die Bewegung des direkt angetriebenen Drehtellers kann dabei der Einfachheit halber über die Drehteller verbindenden Schiebemittel auf den weiteren Drehteller übertragen werden.

Für einen gleichmäßigen und zudem präzise definierten Betrieb der Bearbeitungsvorrichtung bietet es sich alternativ oder zusätzlich an, wenn die Schiebemittel in einem wenigstens im Wesentlichen einheitlichen Radius von der Drehachse wenigstens eines Drehtellers mit diesem verbunden sind. Der Einfachheit halber sind die Schiebemittel zudem vorzugsweise bezogen auf jeden Drehteller in einem konstanten Abstand zur jeweiligen Drehachse mit dem entsprechenden Drehteller verbunden. Dann kann das Verschieben gleichförmig und unabhängig davon erfolgen, in welcher Winkelstellung sich die Drehteller befinden. Besonders einfach und zweckmäßig ist es dabei, wenn die Abstände zwischen den Drehachsen und den Schiebemitteln bei beiden Drehtellern gleich groß sind.

Um Bauraum zu sparen oder um die Packungen mit den Schiebemitteln recht weit verschieben zu können, kann ein Drehteller abschnittsweise in vertikaler Richtung über oder unter der als nächstes von der Vereinzelungseinrichtung zu verschiebenden Packung und/oder soeben von der Vereinzelungseinrichtung verschobenen Packung angeordnet sein. Wenn der Drehteller in vertikaler Richtung über der entsprechenden Packung angeordnet ist, kann bedarfsweise zusätzlich mittels des Drehtellers verhindert werden, dass die Packung während des Vereinzelns, mithin während des seitlichen Verschiebens durch die Schiebemittel, umkippt und so zu Betriebsstörungen führt. Alternativ oder zusätzlich kann ein Drehteller horizontal neben der als nächstes von der Vereinzelungseinrichtung zu verschiebenden Packung und/oder soeben von der Vereinzelungseinrichtung verschobenen Packung angeordnet sein. Auf diese Weise kann beispielsweise eine Behinderung des Packungstransports mit Hilfe der Transporteinrichtung vermieden werden. Dies gilt insbesondere dann, wenn die Packungen auf einem Transportmittel der Transporteinrichtung stehend zur Vereinzelungseinrichtung oder von dort zur Bearbeitungsstation transportiert werden.

Für das Angreifen an die Packungen und das formschlüssige Verschieben der Packungen vom Zuführpfad auf den Weitergabepfad weisen die Schiebemittel vorzugsweise jeweils wenigstens eine Schiebefläche auf. Ist die wenigstens eine Schiebefläche insgesamt groß genug bemessen, sind die beim Verschieben der Packungen auf diese einwirkende flächenspezifischen Kräfte so gering, dass eine Beschädigung der Packungen sicher vermieden werden kann. Wenn die Schiebeflächen zudem parallel zueinander ausgerichtet sind, wird ein schonendes, flächiges Anliegen an den Seiten der Packungen erreicht. Damit die Schiebeflächen, während dem Umlaufen um die geschlossene Transportbahn nicht verstellt und vor dem Angreifen an den Packungen jeweils wieder exakt ausgerichtet werden müssen, können die Schiebeflächen durch eine geeignete Anbindung der Schiebemittel an die Drehteller unabhängig vom Drehwinkel der Drehteller parallel zueinander ausgerichtet sein.

Um einen definierten Packungstransport zu gewährleisten, können die zu vereinzelnden Packungen und/oder die bereits vereinzelten Packungen im Bereich der Vereinzelungseinrichtung auf der den Schiebemittel zugewandten Seiten der Packungen seitlich durch wenigstens eine Führungsfläche geführt sein. Die wenigstens eine Führungsfläche kann dabei durch wenigstens eine Führungsschiene, eine Zuführführung und/oder eine Weitergabeführung bereitgestellt werden, wobei die Zuführführung und/oder eine Weitergabeführung selbst wiederum jeweils wenigstens eine Führungsschiene umfassen können. So wird beispielsweise erreicht, dass sich die zu vereinzelnden Packungen der Reihe nach entlang der entsprechenden, wenigstens einen Führungsschiene und/oder Zuführführung aufstauen. Alternativ oder zusätzlich kann sichergestellt werden, dass die vereinzelten Packungen definiert entlang der wenigstens einen Führungsschiene und/oder der Weitergabeführung in Richtung der Bearbeitungsstation transportiert werden. Damit das Vereinzeln der Packungen durch die Schiebemittel dennoch nicht behindert wird, kann die wenigstens eine Schiebefläche jedes Schiebemittels so vorgesehen sein, dass die Schiebeflächen beim Drehen um die Drehachsen der Drehteller die wenigstens eine Führungsfläche der wenigstens einen Führungsschiene, der Zuführführung und/oder der Weitergabeführung übergreifen und/oder untergreifen. Mit anderen Worten werden die Schiebeflächen von der Seite der Führung horizontal über die Führungsfläche der zugehörigen Führung hinaus in Richtung der Packungen verstellt, um die Packungen somit von der Führungsfläche der jeweiligen Führungsschiene und/oder der Zuführführung weg und in Richtung des Weitergabepfads und/oder der Weitergabeführung zu verschieben.

Um ein besonders gezieltes und schonendes Verschieben der Packungen erreichen zu können, kann jedes Schiebemittel wenigstens zwei Schiebeflächen derart beabstandet voneinander aufweisen, so dass beim Drehen der Drehteller um deren Drehachsen wenigstens eine Schiebefläche die wenigstens eine Führungsfläche der wenigstens einen Führungsschiene, der Zuführführung und/oder der Weitergabeführung wiederholt übergreift und wenigstens eine andere Schiebefläche die wenigstens eine Führungsfläche der wenigstens einen Führungsschiene, der Zuführführung und/oder der Weitergabeführung wiederholt untergreift. So gelangen eine Schiebefläche oberhalb der Führungsschiene, der Zuführführung und/oder der Weitergabeführung und eine Schiebefläche desselben Schiebemittels unterhalb der Führungsschiene, der Zuführführung und/oder der Weitergabeführung in Anlage an die Packung, um die Packung seitlich zu verschieben. So kann bedarfsweise auch ein Umkippen der Packungen beim Verschieben derselben verhindert werden.

Die Vereinzelungseinrichtung kann unabhängig von der Ausgestaltung der Schiebeflächen eine Verschiebeführung zum seitlichen Führen der Packungen während des Verschiebens der Packungen durch die Schiebemittel aufweisen. Dann werden die Packungen beim Verschieben sicherer und gezielter, nämlich nicht bloß durch die Schiebeflächen der Schiebemittel, sondern auch durch die wenigstens eine Führungsfläche der Verschiebeführung, geführt. Wenn die Verschiebeführung in eine Weitergabeführung zum Führen der Packungen entlang des Weitergbepfads übergeht, wird die Führung der Packungen in der Bearbeitungsvorrichtung weiter verbessert. Dabei ist es für einen gleichmäßigen Transport der Packungen förderlich, wenn der Übergang der Verschiebeführung zur Weitergabeführung, insbesondere der Übergang der Führungsfläche der Verschiebeführung zur Führungsfläche der Weitergabeführung stetig erfolgt.

Die zu vereinzelnden Packungen und/oder die vereinzelten Packungen können der Einfachheit halber zum Transport der Packungen entlang des Zuführpfads und/oder des Weitergbepfads auf einem Transportmittel der Transporteinrichtung stehen. Es kann sich bei dem Transportmittel daher beispielsweise um einen Bandförderer handeln. Die Packungen können so schonend und ohne großen apparativen Aufwand transportiert werden. Der Transport der Packungen kann infolge eines Reibschlusses zwischen dem Transportmittel der Transporteinrichtung bewirkt werden. Es ist aber dennoch oder alternativ möglich, dass sich zwischen dem Transportmittel und den darauf stehenden Packungen ein Schlupf ausbildet. Infolge des Schlupfs unterscheiden sich die Transportgeschwindigkeiten der Packungen von der Transportgeschwindigkeit des unter den Packungen angeordneten Transportmittels. Der Einfachheit halber und für einen präzise definierten Transport der Packungen können die Packungen in der Transportrichtung formschlüssig und/oder reibschlüssig gebremst, gehalten und/oder bewegt werden und beispielsweise dadurch einen Schlupf zwischen den Packungen und dem Transportmittel zu bewirken.

Alternativ oder zusätzlich kann ein sich seitlich der zu vereinzelnden Packungen und/oder der vereinzelten Packungen erstreckendes Transportmittel zum Transport der Packungen in Transportrichtung vorgesehen sein. Dieses Transportmittel kann den präzisen Transport bewerkstelligen oder unterstützen, etwa um ein Umkippen der Packungen zu verhindern. Das seitliche Transportmittel kann bevorzugt aber auch zum formschlüssigen und/oder reibschlüssigen Bremsen, Halten und/oder Bewegen der Packungen in Bezug auf die Transportgeschwindigkeit des die Packungen tragenden Transportmittels, vorgesehen sein. Mit anderen Worten kann das seitliche Transportmittel die Transportgeschwindigkeit definieren, wobei die Transportgeschwindigkeit des seitlichen Transportmittels vorzugsweise der Transportgeschwindigkeit der Packungen entspricht, während die Transportgeschwindigkeit des Transportmittels, auf dem die Packungen stehen, schneller oder langsamer als die Transportgeschwindigkeit der Packungen ist.

Die Zuverlässigkeit des Packungshandlings mit der Vereinzelungseinrichtung kann weiter gesteigert werden, wenn die Schiebemittel wenigstens eine Anschlagfläche zur Anlage an die jeweils nächste zu vereinzelnde Packung aufweisen. So kann die als nächstes zu vereinzelnde Packung beispielsweise durch das die vorhergehende Packung vereinzelnde Schiebemittel geführt werden, nämlich durch Anlage an der Anschlagfläche dieses Schiebemittels, und zwar bis die Packung durch das nachfolgende Schiebemittel vereinzelt bzw. verschoben wird. Die Anlage der als nächstes zu vereinzelnden Packung an der Anschlagfläche des die vorangegangene Packung vereinzelnden bzw. verschiebenden Packungsmittels kann zu einem formschlüssigen Bremsen der als nächstes zu vereinzelnden Packungen in Bezug auf die Transportgeschwindigkeit des die Packungen tragenden Transportmittels genutzt werden. Über ein sich schnell bewegendes Transportmittel können die Packungen rasch herangeführt werden, wobei die Packungen durch Anlage jeweils der vordersten Packung an der Anschlagfläche eines Schiebemittels abgebremst bzw. aufgestaut werden. Dadurch werden die jeweils als nächstes zu vereinzelnden Packungen jeweils exakt für das Vereinzeln bzw. das seitliche Verschieben durch das nachfolgende Schiebemittel positioniert.

Apparativ einfach ist es, wenn das die Packungen tragende Transportmittel und/oder das seitlich der vereinzelten Packungen vorgesehene Transportmittel ein Bandförderer ist. Dabei kann das seitliche Transportmittel beispielsweise Haltenocken zur Anlage an einer in Transportrichtung der Packungen und/oder entgegen der Transportrichtung weisenden Fläche der Packungen aufweisen. Die Haltenocken können dann durch die formschlüssige Anlage an den entsprechenden Flächen der Packungen diese Packungen gegenüber dem Transportmittel, auf dem die Packungen stehen, beschleunigen oder abbremsen. Die Packungen bewegen sich dann mit der Transportgeschwindigkeit der Haltenocken und nicht mit der bedarfsweise abweichenden Transportgeschwindigkeit des die Packungen tragenden Transportmittels. Im Falle eines Haltenocken aufweisenden seitlich zu den vereinzelten Packungen angeordneten Transportmittels bietet es sich an, wenn dieses Transportmittel auch abschnittsweise seitlich zu den noch zu vereinzelnden Packungen entlang des Zuführpfads angeordnet ist. So kann die Vereinzelung der Packungen gleichmäßig und zuverlässig erfolgen. Da insbesondere die jeweils als nächstes zu vereinzelnde Packung präzise gegenüber der Vereinzelungseinrichtung ausgerichtet sein sollte, kann es ausreichen, wenn das Haltenocken aufweisende seitliche Transportmittel sich wenigstens seitlich neben der als nächstes zu vereinzelnden Packung erstreckt.

Bei einer ersten besonders bevorzugten Ausgestaltung des Verfahrens liegt die jeweils als nächstes zu vereinzelnde Packung an wenigstens einer Anschlagfläche eines Schiebemittels an, wobei die Anlagefläche dann vorzugsweise jeweils von dem Schiebemittel bereitgestellt wird, das die vorangegangene Packung verschiebt. Unabhängig davon kann die jeweils als nächstes zu vereinzelnde Packung zudem auf einem Transportmittel stehen und von dem Transportmittel reibschlüssig, vorzugsweise unter Ausbildung eines Schlupfs, gegen die Anschlagfläche bewegt werden. Dies kann derart erfolgen, dass sich das die als nächstens zu vereinzelnde Packung tragende Transportmittel schneller in Transportrichtung bewegt als dies das sich vor der entsprechenden Packung befindende Schiebemittel tut. Die Anschlagfläche dieses Schiebemittels bremst mithin die Packung in Bezug auf das die Packung tragende Transportmittel.

Die Verfahrensführung ist besonders einfach, wenn alternativ oder zusätzlich die jeweils an der Anschlagfläche eines Schiebemittels anliegende Packung von dem jeweils darauffolgenden Schiebemittel vom Zuführpfad auf den Weitergabepfad verschoben und dabei vereinzelt wird. So positioniert letztlich das vorangehende Schiebemittel die nächste Packung für das Verschieben mit dem nachfolgenden Schiebemittel, was die Funktionalität der Schiebemittel erhöht.

Die Packungen können der Einfachheit halber auf einem Transportmittel, insbesondere Bandförderer, stehend entlang des Zuführpfads der Vereinzelungseinrichtung zugeführt und auf demselben Transportmittel stehend entlang des Weitergabepfads in Richtung der Bearbeitungsstation weitergeben werden. So kann die Anzahl der benötigten Transportmittel und damit der apparative Aufwand verringert werden.

Alternativ oder zusätzlich können die vereinzelten Packungen formschlüssig von einem Haltenocken eines seitlich zu den vereinzelten Packungen angeordneten Transportmittels weiterbewegt werden, und zwar vorzugsweise mit der Transportgeschwindigkeit des jeweils zugeordneten Haltenockens. Zudem bietet es sich an, wenn die vereinzelten Packungen während des formschlüssigen Weitertransportierens der Packungen auf einem sich langsamer als der jeweilige Haltenocken bewegenden Transportmittel stehen. Dann wird die Transportgeschwindigkeit über den Haltenocken definiert aber die Packung schonend über einen sich in dieselbe Richtung bewegendes Transportmittel gezogen.

Die vereinzelten Packungen können während des formschlüssigen Weitertransportierens der Packungen auch auf einem sich in Transportrichtung der Packungen schneller als die Packungen bewegenden Transportmittels stehen. Die Packungen können dann jeweils gegen einen Haltenocken eines sich seitlich der vereinzelten Packungen erstreckenden und sich in Transportrichtung der Packungen bewegenden Transportmittels gedrückt werden, wobei sich bevorzugt ein Schlupf zwischen den Packungen und dem die Packungen tragenden Transportmittel ausbildet. So wird sichergestellt, dass die Packungen immer die Transportgeschwindigkeit der Haltenocken aufweisen, ohne dass die Haltenocken die Packungen in Transportrichtung ziehen müssen, was zu einer Beschädigung der Packungen führen könnte.

Die Packungen können alternativ oder zusätzlich auch seitlich entlang wenigstens einer Zuführführung, während dem Vereinzeln entlang einer seitlichen Verschiebeführung und/oder nach dem Vereinzeln entlang einer seitlichen Weitergabeführung geführt werden, um die Packungen beim Transport in die jeweils gewünschte Richtung zu leiten. Das Verschieben der Packungen kann dann über Schiebeflächen der Schiebemittel erfolgen, die zum Verschieben der Packungen wiederholt, insbesondere jeweils bei jeder Umdrehung einmal, in horizontaler Richtung über wenigstens eine Führungsfläche der wenigstens einen Führungsschiene, der wenigstens einen Zuführführung und/oder der wenigstens einen Weitergabeführung greifen und gegen die Packungen stoßen, und zwar so weit, dass die Schiebeflächen die Packungen zur Seite schieben. Dabei kann die wenigstens eine Schiebefläche des wenigstens einen Schiebemittels in vertikaler Richtung gesehen über der jeweiligen Führung und/oder unter der jeweiligen Führung angeordnet sein.

Nachfolgend wird die Erfindung anhand einer lediglich ein Ausführungsbeispiel darstellenden Zeichnung näher erläutert. In der Zeichnung zeigt
- Fig. 1A-B: eine erste erfindungsgemäße Bearbeitungsvorrichtung im Bereich einer Vereinzelungseinrichtung in einer schematischen Draufsicht und einer schematischen perspektivischen Ansicht,
- Fig. 2A-C: die Vereinzelungseinrichtung aus Fig. 1A-B in einer schematischen Draufsicht, einer schematischen perspektivischen Ansicht und einer schematischen Schnittansicht und
- Fig. 3: die Bearbeitungsvorrichtung gemäß Fig. 1A-B im Bereich einer Bearbeitungsstation in einer schematischen Draufsicht,
- Fig. 4: eine zweite erfindungsgemäße Bearbeitungsstation im Bereich einer Vereinzelungseinrichtung in einer schematischen Draufsicht.

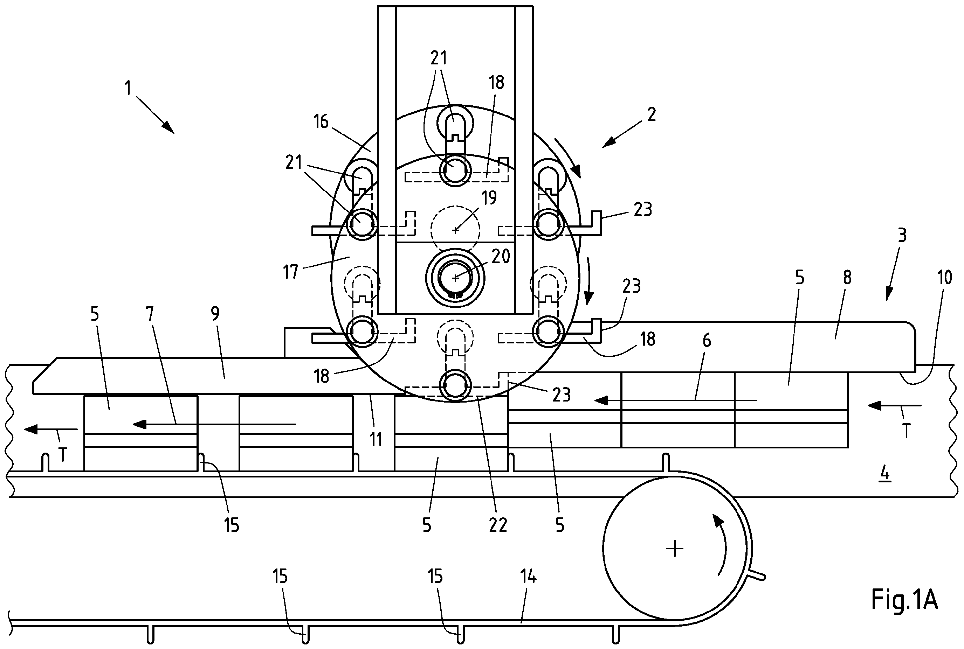

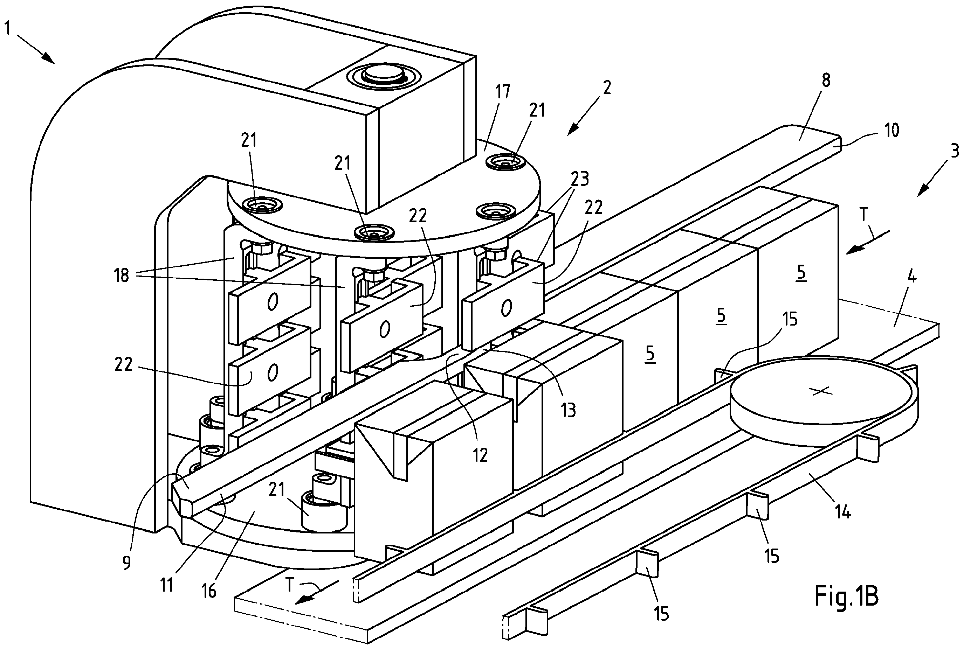

In den Fig. 1A-B ist eine Bearbeitungsvorrichtung 1 im Bereich einer Vereinzelungseinrichtung 2 in einer schematischen Draufsicht und einer schematischen perspektivischen Ansicht dargestellt. Die Bearbeitungseinrichtung 1 weist eine Transporteinrichtung 3 auf, die ein sich in eine Transportrichtung T bewegendes Transportmittel 4, etwa in Form eines Bandförderers, umfasst, auf dem Packungen 5 stehend gefördert werden. Das entsprechende Transportmittel 4 der Transporteinrichtung 3 führt die Packungen 5 zunächst entlang eines vorliegend geradlinig ausgebildeten Zuführpfads 6 der Vereinzelungseinrichtung 2 zu. Nach dem Vereinzeln der Packungen 5 transportiert dasselbe Transportmittel 4 der Transporteinrichtung 3 die vereinzelten und weiterhin auf dem Transportmittel 4 stehenden Packungen 5 entlang eines vorliegend ebenfalls geradlinig ausgebildeten Weitergabepfads 7 weiter. Bei der dargestellten und insoweit bevorzugten Bearbeitungsvorrichtung 1 sind der Zuführpfad 6 und der Weitergabepfad 7 parallel zueinander ausgerichtet und in horizontaler Richtung voneinander beabstandet angeordnet.

Auf den der Vereinzelungseinrichtung 2 zugewandten Seiten des Zuführpfads 6 und des Weitergabepfads 7 sind eine Zuführführung 8 und eine Weitergabeführung 9 vorgesehen, die jeweils Führungsflächen 10,11 zum Führen der entlang der Zuführführung 8 und der Weitergabeführung 9 transportierten Packungen 5 entlang des Zuführpfads 6 und des Weitergabepfads 7 bereitstellen. Dabei sind die Führungsflächen 10,11 der Zuführführung 8 und der Weitergabeführung 9 ebenso parallel und gegeneinander versetzt, wie dies für den Zuführpfad 6 und den Weitergabepfad 7 der Fall ist. Zudem ist bei der dargestellten und insoweit bevorzugten Bearbeitungsvorrichtung 1 zwischen der Zuführführung 8 und der Weitergabeführung 9 eine Verschiebeführung 12 vorgesehen, die der Führung der Packungen 5 beim Vereinzeln, also bei Verschieben vom Zuführpfad 6 auf den Weitergabepfad 7, dient. Dabei können die Packungen 5 an einer Führungsfläche 13 der Verschiebeführung 12 abgleiten, die stetig in die Führungsfläche 11 der Weitergabeführung 9 übergeht.

Während die Packungen 5 entlang des Zuführpfads 6 ausschließlich durch das die Packungen 5 tragende Transportmittel 4 erfolgt, bleiben die Packungen 5 nach dem Vereinzeln zwar auf dem Transportmittel 5 stehen. Die Transportgeschwindigkeit der Packungen 5 wird jedoch durch ein weiteres seitlich der Packungen 5 angeordnetes Transportmittel 14 bestimmt, bei dem es sich vorzugsweise um einen Bandförderer handeln kann. Das Transportmittel 14 weist Haltenocken 15 auf, die formschlüssig an den entgegen der Transportrichtung T weisenden Seiten der Packungen 5 anliegt. Die Haltenocken 15 bewegen sich in der Transportrichtung schneller als die Packungen 5 tragende Transportmittel 4. Mithin bildet sich zwischen den Packungen 5 und dem diese tragenden Transportmittel 4 ein Schlupf aus und schieben die Haltenocken 15 die Packungen 5 über das Transportmittel 4. So definiert der vorzugsweise konstante Abstand der Haltenocken 15 den Abstand der vereinzelten und weitergegebenen Packungen 5.

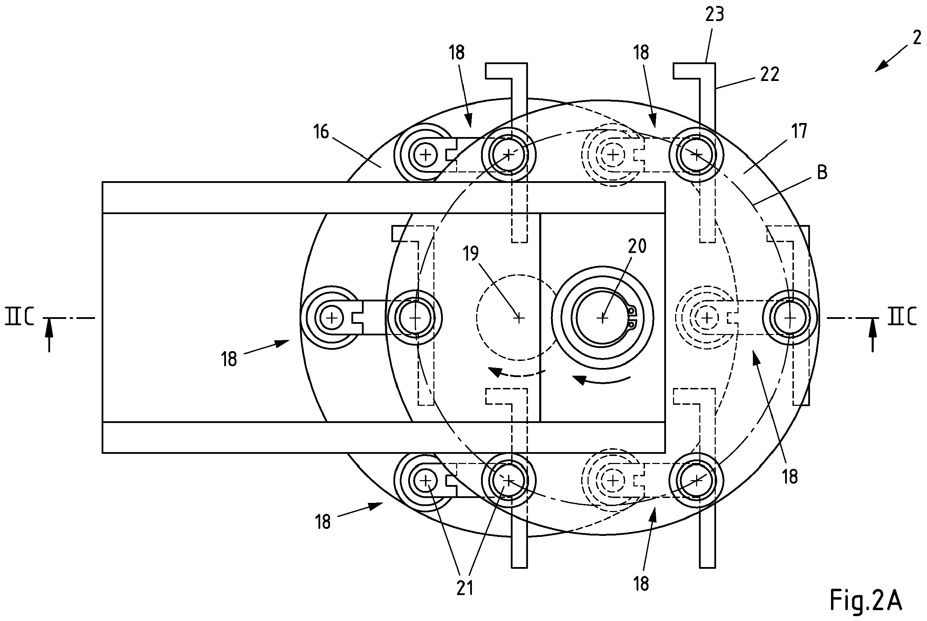

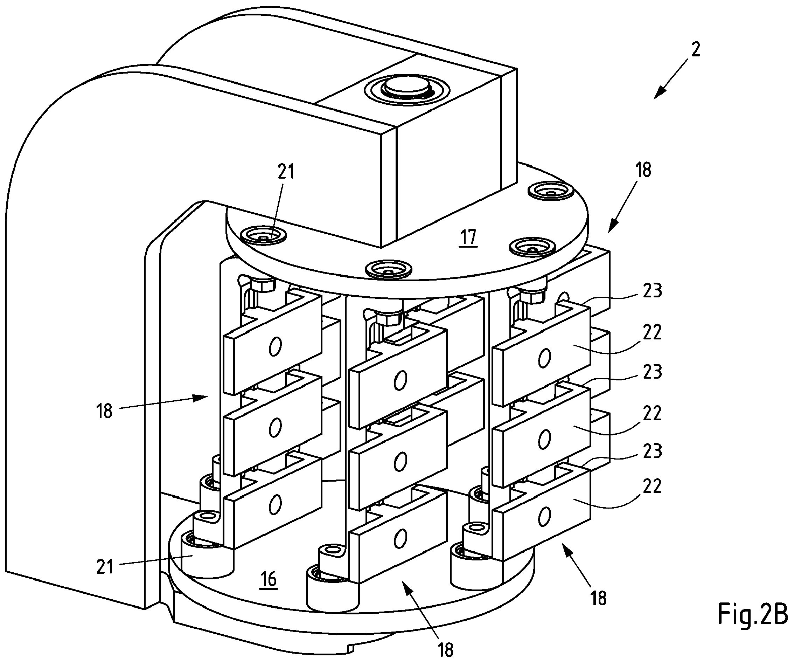

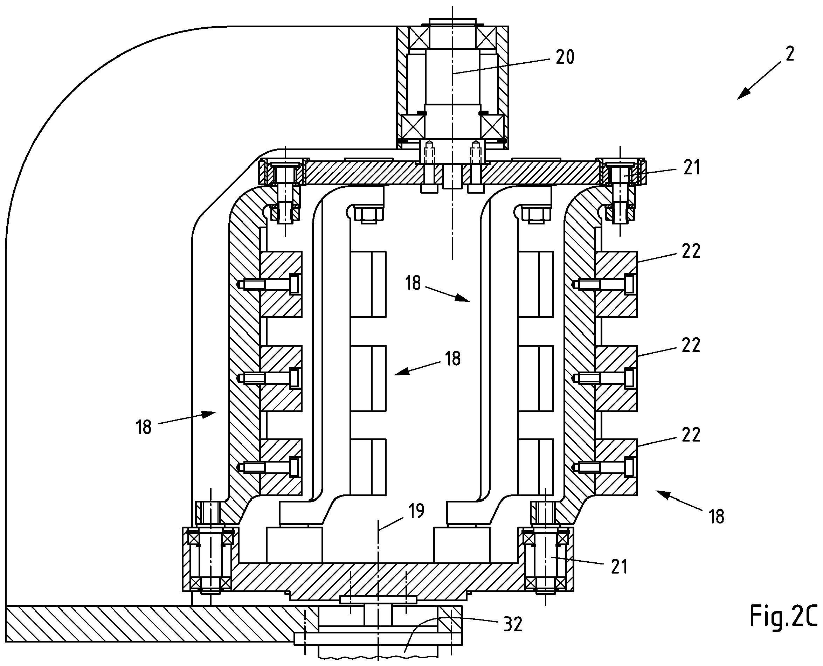

Die in den Fig. 2A-C separat dargestellte Vereinzelungseinrichtung 2 weist zwei parallel zueinander ausgerichtete Drehteller 16,17 auf, die mittels einer Reihe gleichförmig über den Umfang der Drehteller 16,17 verteilt angeordneter Schiebemittel 18 verbunden sind. Die Schiebemittel 18 sind dabei drehbar und stets in dem gleichen Abstand zur Drehachse 19,20 des jeweiligen Drehtellers 16,17 an den Drehtellern 16,17 festgelegt. Die Drehteller 16,17 sind wie deren Drehachsen 19,20 in horizontaler Richtung gegeneinander versetzt, ansonsten aber parallel zueinander angeordnet. Auch die Verbindungen 21 eines jeden Schiebemittels 18 mit den beiden Drehtellern 16,17 ist in gleicher Weise voneinander beabstandet wie die Drehachsen 19,20 der Drehteller 16,17. Wenn die Drehteller 16,17 drehen, laufen die Schiebemittel 18 entlang einer geschlossenen Transportbahn B endlos um. Durch die Verbindung der Drehteller 16,17 über die Schiebemittel 18 reicht es aus, einen Drehteller 16 über einen Antrieb 32 anzutreiben, vorliegend den unteren Drehteller 16, um beide Drehteller 16,17 um ihre Drehachsen 19,20 gemäß der dargestellten Pfeile in Drehung zu versetzen. Bei der dargestellten und insoweit bevorzugten Vereinzelungseinrichtung 2 drehen sich die beiden Drehteller 16,17 gleich schnell. Zudem bleiben die Schiebemittel 18 während des Drehens der Drehteller 16,17 in gleicher Weise in Richtung der Packungen 5 ausgerichtet. Die Schiebemittel 18 weisen jeweils mehrere in vertikaler Richtung voneinander beabstandete Schiebeflächen 22 auf, die zum Vereinzeln seitlich an den Packungen 5 anliegen, sofern die Packungen 5 eine ausreichende Höhe aufweisen. Diese Schiebeflächen 18 sind in jeder Winkelstellung der Drehteller 16,17 parallel zu den Packungen 5 bzw. zum Zuführpfad 6 und/oder zum Weitergabepfad 7 ausgerichtet. Des Weiteren sind die Schiebemittel 18 mit Anschlagflächen 23 versehen, die wenigstens im Wesentlichen rechtwinklig zu den Schiebeflächen 22 ausgerichtet sind, aber nicht sein müssen.

Die Schiebeflächen 22 sind entweder oberhalb oder unterhalb der als Führungsschiene ausgebildeten Zuführführung 8 und der Weitergabeführung 9 angeordnet, wie dies in den Fig. 1A-B dargestellt ist. Grundsätzlich könnte die Zuführführung 8 und die Weitergabeführung 9 auch mehrere übereinander angeordnete Führungsschienen umfassen, so dass die Schiebeflächen 22 dann vorzugsweise über oder unter einer solchen Führungsschiene angeordnet wären. Anders ausgedrückt kann eine jede Schiebefläche 22 oberhalb oder unterhalb einer Führungsfläche 10,11 der Zuführführung 8 und/oder der Weitergabeführung 9 angeordnet sein. Die Schiebeflächen 22 der Schiebemittel 18 werden auf der den Packungen 5 abgewandten Seite der Führungsflächen 10,11 herangeführt und über die Führungsflächen 10,11 hinaus gegen die Packungen 5 gedrückt, wobei sich die Packungen 5 ebenso wie die Schiebeflächen 22 in horizontaler Richtung von den Führungsflächen 10,11 in Richtung der von der Vereinzelungseinrichtung 2 abgewandten Seite der Packungen 5 weg bewegen. Dabei erfolgt die Vereinzelung der Packungen 5, wonach die entsprechenden Schiebeflächen 22 der Schiebemittel 18 wieder in Richtung der Vereinzelungseinrichtung 2 hinter die Führungsflächen 10,11 zurück bewegt werden.

Die zu vereinzelnden Packungen 5 werden währenddessen entlang des Zuführpfads 6 aufgestaut, indem die jeweils vorderste und daher als nächstes zu vereinzelnde Packung 5 an Anschlagflächen 23 des Schiebemittels 18 anliegt, das die Vereinzelung der vorangegangenen Packung 5 durch das Verschieben der Packung 5 bewirkt. Die als nächstes zu vereinzelnde Packung 5 gelangt sodann in Anlage an die Schiebeflächen 22 des nachfolgenden Schiebemittels 18, wodurch die Vereinzelung dieser Packung 5 herbeigeführt wird, wobei dann die nachfolgende Packung 5 ihrerseits an der Anschlagfläche 23 zur Anlage kommt, um die noch zu vereinzelnden Packungen 5 aufzustauen und die als nächstes zu vereinzelnde Packung 5 für das Vereinzeln mit dem nachfolgenden Schiebemittel 18 zu positionieren.

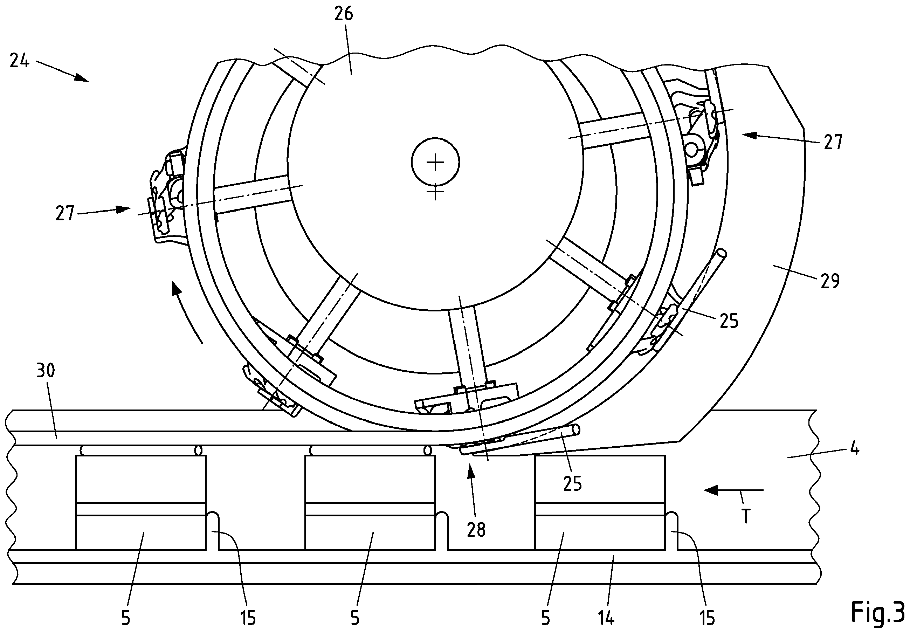

In der Fig. 3 ist die Bearbeitungsvorrichtung 1 gemäß Fig. 1A-B im Bereich einer Bearbeitungsstation 24 in einer schematischen Draufsicht dargestellt. Die Bearbeitungsstation 24 dient dem Applizieren von Packhilfsmitteln 25 in Form von Strohhalmen an die Seiten der zuvor mittels der Vereinzelungseinrichtung 2 vereinzelten Packungen 5. Die Packungen 5 werden dazu mit Hilfe des seitlichen, Haltenocken 15 aufweisenden Transportmittels 14 entlang des Weitergabepfads 7 an der Bearbeitungsstation 24 vorbei transportiert. Die Packungen 5 passieren dabei ein rotierendes Applikationsrad 26 an dem umlaufend Applikatoren 27 vorgesehen sind, die Packhilfsmittel 25 an die Packungen 5 herantragen und die Packhilfsmittel 25 in einer Applikationsposition 28 an die Packungen 5 applizieren. Die Packungen 5 können dazu zuvor mit Klebstoff versehen worden sein. Während dem Herantransportieren der Packhilfsmittel 25 in Richtung der Packungen 5 werden die Packhilfsmittel 25 entlang einer Packhilfsmittelführung 29 bewegt, die ein Herunterfallen der Packhilfsmittel 25 von den Applikatoren 27 verhindert. Nach dem Applizieren der Packhilfsmittel 25 an die Packungen 5 werden die Packhilfsmittel 25 mittels eines endlos umlaufenden Bands 30 an den Packungen 5 fixiert, bis der Klebstoff ausgehärtet ist.

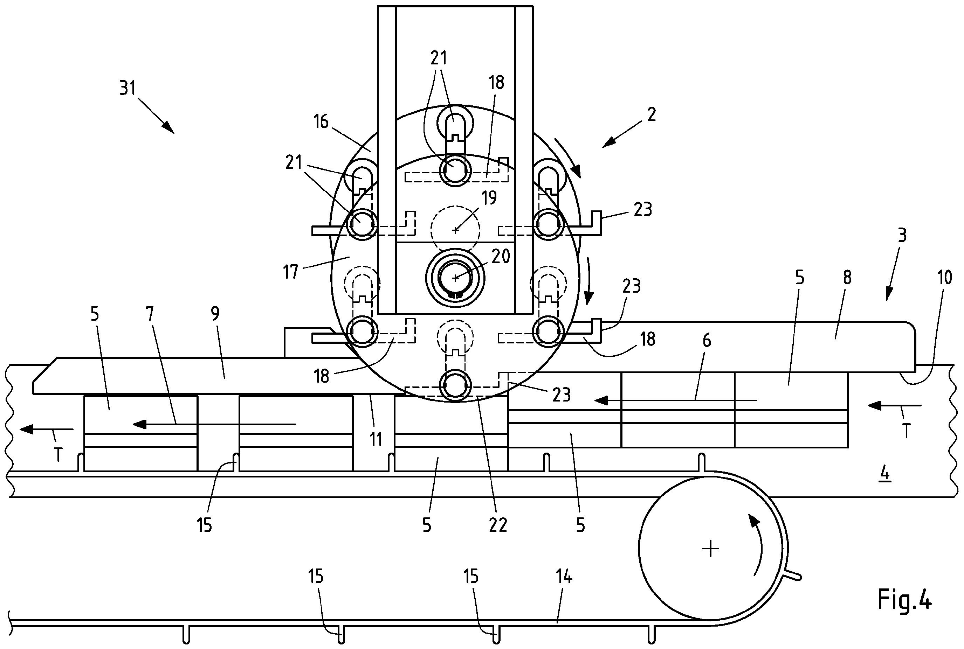

In der Fig. 4 ist eine alternative Bearbeitungsvorrichtung 31 im Bereich einer Vereinzelungseinrichtung 2 dargestellt, die der zuvor beschriebenen Bearbeitungsvorrichtung 1 ähnlich ist. Daher tragen gleiche Bauteile auch gleiche Bezugszeichen. Ein wesentlicher Unterschied liegt jedoch darin, dass das Transportmittel 4, auf dem die Packungen 5 stehen, sich schneller bewegt als das seitlich der Packungen 5 angeordneten Transportmittel 14. Die Transportgeschwindigkeit der Packungen 5 ist jedoch durch die Transportgeschwindigkeit der Haltenocken 15 des seitlich der Packungen 5 angeordneten Transportmittels 14 beschränkt gegen die das untere Transportmittel 4 die Packungen 5 drückt. Aufgrund der Unterschiede hinsichtlich der Transportgeschwindigkeiten beider Transportmittel 4,14 bildet sich ein Schlupf zwischen dem unteren Transportmittel 4 und den darauf stehenden Packungen 5 aus.

Bei den dargestellten und insoweit bevorzugten Packungen 5 handelt es sich um Karton-Verbundpackungen, insbesondere Getränkekarton-Verbundpackungen. Die zugehörigen Verpackungen sind aus einem flächigen, schichtförmigen Packungslaminat gebildet, das durch Falten und stoffschlüssige Siegelnähte zu einer geschlossenen Packung geformt worden ist. Die Verpackung ist vorliegend mit einem fließfähigen Lebensmittel, insbesondere einem Getränk, gefüllt und durch Siegeln des Packungslaminats geschlossen. Das Packungslaminat weist vorliegend eine Kartonschicht und äußere Kunststoffschichten aus einem thermoplastischen Kunststoff auf.

### Bezugszeichenliste

- 1: Bearbeitungsvorrichtung
- 2: Vereinzelungseinrichtung
- 3: Transporteinrichtung
- 4: Transportmittel
- 5: Packungen
- 6: Zuführpfad
- 7: Weitergabepfad
- 8: Zuführführung
- 9: Weitergabeführung
- 10,11: Führungsflächen
- 12: Verschiebeführung
- 13: Führungsfläche
- 14: Transportmittel
- 15: Haltenocken
- 16,17: Drehteller
- 18: Schiebemittel
- 19,20: Drehachse
- 21: Verbindung
- 22: Schiebeflächen
- 23: Anschlagflächen
- 24: Bearbeitungsstation
- 25: Packhilfsmittel
- 26: Applikatorrad
- 27: Applikator
- 28: Applikationsposition
- 29: Packhilfsmittelführung
- 30: Band
- 31: Bearbeitungsvorrichtung

## Patentansprüche

1. Bearbeitungsvorrichtung (1,31) zum Bearbeiten von, vorzugsweise gefüllten und geschlossenen, Packungen (5), insbesondere Karton-Verbundpackungen, mit einer Bearbeitungsstation (24) zum Bearbeiten der Packungen (5), vorzugsweise zum Formen der Packungen (5) und/oder zum Applizieren von Packhilfsmitteln (25) an die Packungen (5), mit einer Transporteinrichtung (3) zum Zuführen von, insbesondere aufgestauten, Packungen (5) entlang eines Zuführpfads (6) und zum Weitertransport von vereinzelten Packungen (5) in Richtung der Bearbeitungsstation (24) entlang eines Weitergabepfads (7) und mit einer Vereinzelungseinrichtung (2) zum Vereinzeln der über die Transporteinrichtung (3) zugeführten Packungen (5), wobei die Vereinzelungseinrichtung (2) mehrere jeweils entlang einer gemeinsamen geschlossenen Transportbahn (B) umlaufende und entlang der Transportbahn (B) verteilt angeordnete Schiebemittel (18) zum formschlüssigen Verschieben der Packungen (5) vom Zuführpfad (6) auf den Weitergabepfad (7) wenigstens im Wesentlichen quer zum Zuführpfad (6) und/oder Weitergabepfad (7) im Bereich der Vereinzelungseinrichtung (2) aufweist,
**dadurch gekennzeichnet, dass**
die Schiebemittel (18) an zwei in vertikaler Richtung voneinander beabstandeten und um jeweils eine Drehachse (19,20) drehbaren Drehtellern (16,17) montiert sind und dass die Drehachsen (19,20) der Drehteller (16,17) parallel zueinander ausgerichtet und horizontal voneinander beabstandet angeordnet sind.

2. Vorrichtung nach Anspruch 1,
**dadurch gekennzeichnet, dass**
die Schiebemittel (18) gleichförmig über den Umfang wenigstens eines Drehtellers (16,17) verteilt angeordnet, biegesteif ausgebildet und/oder drehbar mit wenigstens einem Drehteller (16,17) verbunden sind und/oder dass ein Drehteller (16,17) über einen Antrieb (32) und der andere Drehteller (16,17) über den ersten Drehteller (16,17) und die die beiden Drehteller (16,17) verbindenden Schiebemittel (18) angetrieben ist und/oder
dass die Schiebemittel (18) in einem wenigstens im Wesentlichen einheitlichen Radius von der Drehachse (19,20) eines Drehtellers (16,17) mit dem Drehteller (16,17) verbunden sind und, vorzugsweise, die Schiebemittel (18) in einem wenigstens im Wesentlichen einheitlichen Radius von den jeweiligen Drehachsen (19,20) der Drehteller (16,17) mit den Drehtellern (16,17) verbunden sind.

3. Vorrichtung nach einem der Ansprüche 1 bis 2,
**dadurch gekennzeichnet, dass**
ein Drehteller (16,17) abschnittsweise in vertikaler Richtung über oder unter der als nächstes von der Vereinzelungseinrichtung (2) zu verschiebenden Packung (5) oder soeben von der Vereinzelungseinrichtung (2) verschobenen Packung (5) angeordnet ist und/oder
dass ein Drehteller (16,17) horizontal neben der als nächstes von der Vereinzelungseinrichtung (2) zu verschiebenden Packung (5) oder soeben von der Vereinzelungseinrichtung (2) verschobenen Packung (5) angeordnet ist und/oder
dass die Schiebemittel (18) jeweils wenigstens eine Schiebefläche (22) zum formschlüssigen Verschieben der Packungen (5) vom Zuführpfad (6) auf den Weitergabepfad (7) aufweisen und, vorzugsweise, die Schiebeflächen (22), insbesondere unabhängig vom Drehwinkel der Drehteller (16,17), parallel zueinander ausgerichtet sind.

4. Vorrichtung nach einem der Ansprüche 1 bis 3,
**dadurch gekennzeichnet, dass**
die zu vereinzelnden Packungen (5) und/oder die vereinzelten Packungen (5) im Bereich der Vereinzelungseinrichtung (2) auf der den Schiebemittel (18) zugewandten Seiten der Packungen (5) seitlich durch wenigstens eine Führungsfläche (10,11) wenigstens einer Zuführführung (8) und/oder Weitergabeführung (9) geführt sind und dass, vorzugsweise, wenigstens eine Schiebefläche (22) jedes Schiebemittels (18) so vorgesehen ist, dass die Schiebeflächen (22) beim Drehen um die Drehachsen (19,20) der Drehteller (16,17) die wenigstens eine Führungsfläche (10,11) der wenigstens einen Führungsschiene, Zuführführung (8) und/oder Weitergabeführung (9) übergreifen und/oder untergreifen, um die Packungen (5) zu verschieben.

5. Vorrichtung nach Anspruch 4,
**dadurch gekennzeichnet, dass**
jedes Schiebemittels (18) wenigstens zwei Schiebeflächen (22) derart beabstandet voneinander aufweist, so dass beim Drehen der Drehteller (16,17) um deren Drehachsen (19,20) zum Verschieben der Packungen (5) wenigstens eine Schiebefläche (22) die wenigstens eine Führungsfläche (10,11) der wenigstens einen Zuführführung (8) und/oder Weitergabeführung (9) wiederholt übergreift und wenigstens eine andere Schiebefläche (22) die wenigstens eine Führungsfläche (10,11) der wenigstens einen Führungsschiene, Zuführführung (8) und/oder Weitergabeführung (9) wiederholt untergreift.

6. Vorrichtung nach einem der Ansprüche 1 bis 5,
**dadurch gekennzeichnet, dass**
die Vereinzelungseinrichtung (2) eine Verschiebeführung (12) zum seitlichen Führen der Packungen (5) während dem Verschieben der Packungen (5) durch die Schiebemittel (18) aufweist und dass, vorzugsweise, die Verschiebeführung (12), vorzugsweise stetig, in eine Weitergabeführung (9) zum Führen der Packungen (5) entlang des Weitergbepfads (7) übergeht.

7. Vorrichtung nach einem der Ansprüche 1 bis 6,
**dadurch gekennzeichnet, dass**
die zu vereinzelnden Packungen (5) und/oder die vereinzelten Packungen (5) zum Transport der Packungen (5) entlang des Zuführpfads (6) und/oder des Weitergabepfads (7) auf einem Transportmittel (4) stehen und dass, vorzugsweise, die Packungen (5) unter Ausbildung eines Schlupfs zwischen den Packungen (5) und dem wenigstens einen Transportmittel (4) in Transportrichtung (T) formschlüssig und/oder reibschlüssig gebremst, gehalten und/oder bewegt sind.

8. Vorrichtung nach einem der Ansprüche 1 bis 7,
**dadurch gekennzeichnet, dass**
ein sich seitlich der vereinzelten Packungen (5) erstreckendes Transportmittel (14) zum Transport der Packungen (5) in Transportrichtung (T) und, vorzugsweise, zum formschlüssigen und/oder reibschlüssigen Bremsen, Halten und/oder Bewegen der Packungen (5) in Bezug auf die Transportgeschwindigkeit des die Packungen (5) tragenden Transportmittels (4), vorgesehen ist.

9. Vorrichtung nach einem der Ansprüche 1 bis 8,
**dadurch gekennzeichnet, dass**
die Schiebemittel (18) wenigstens eine Anschlagfläche (23) zur Anlage an die jeweils nächste zu vereinzelnde Packung (5) aufweisen und dass, vorzugsweise, die Anschlagfläche (23) zum formschlüssigen Bremsen der zu vereinzelnden Packungen (5) in Bezug auf die Transportgeschwindigkeit des die Packungen (5) tragenden Transportmittels (4) ausgebildet ist.

10. Vorrichtung nach einem der Ansprüche 1 bis 9,
**dadurch gekennzeichnet, dass**
das die Packungen (5) tragende Transportmittel (4) ein Bandförderer ist und/oder dass das seitlich der vereinzelten Packungen (5) vorgesehene Transportmittel (14) ein, vorzugweise Haltenocken (15) zur Anlage einer in Transportrichtung (T) der Packungen (5) und/oder entgegen der Transportrichtung (T) weisenden Fläche der Packungen (5) aufweisender, Bandförderer ist und dass, vorzugsweise, der Haltenocken (15) aufweisende Bandförderer sich abschnittsweise seitlich zu den zu vereinzelnden Packungen (5) entlang des Zuführpfads (6), vorzugsweise wenigstens seitlich neben der als nächstes zu vereinzelnden Packung (5), erstreckt.

11. Verfahren zum Bearbeiten von, vorzugsweise gefüllten und geschlossenen, Packungen (5), insbesondere Karton-Verbundpackungen,
- bei dem zu vereinzelnde, insbesondere aufgestaute, Packungen (5) mit einer Transporteinrichtung (3) entlang eines Zuführpfads (6) einer Vereinzelungseinrichtung (2) zugeführt und von der Vereinzelungseinrichtung (2) entlang eines Weitergabepfads (7) in Richtung einer Bearbeitungsstation (24) weitertransportiert werden,
- bei dem die Packungen (5) in der Vereinzelungseinrichtung (2) mit in einer geschlossenen Transportbahn (B) umlaufenden und entlang der Transportbahn (B) verteilten Schiebemitteln (18) formschlüssig von dem Zuführpfad (6) auf den Weitergabepfad (7) und wenigstens im Wesentlichen quer zum Zuführpfad (6) und/oder Weitergabepfad (7) im Bereich der Vereinzelungseinrichtung (2) verschoben werden,
- bei dem zwei in vertikaler Richtung voneinander beabstandete und mit den Schiebemitteln (18) verbundene Drehteller (16) um parallel zueinander ausgerichtete und horizontal voneinander beabstandete Drehachsen (19,20) gedreht werden und
- bei dem die vereinzelten Packungen (5) in einer Bearbeitungsstation (24) bearbeitet, insbesondere geformt oder mit Packhilfsmittel (25) versehen, werden.

12. Verfahren nach Anspruch 13,
- bei dem die jeweils als nächstes zu vereinzelnde Packung (5) an wenigstens einer Anschlagfläche (23) des Schiebemittels (18) anliegt und
- bei dem, vorzugsweise, die jeweils als nächstes zu vereinzelnde Packung (5) auf einem Transportmittel (4) steht und von dem Transportmittel (4) reibschlüssig, vorzugsweise unter Ausbildung eines Schlupfs, gegen die Anschlagfläche (23) bewegt wird und/oder bei dem, vorzugsweise, die jeweils an der Anschlagfläche (23) eines Schiebemittels (18) anliegende Packung (5) von dem darauffolgenden Schiebemittel (18) vom Zuführpfad (6) auf den Weitergabepfad (7) verschoben wird.

13. Verfahren nach Anspruch 11 oder 12,
- bei dem die vereinzelten Packungen (5) formschlüssig von einem Haltenocken (15) eines seitlich zu den vereinzelten Packungen (5) angeordneten Transportmittel (14) weiterbewegt werden und
- bei dem, vorzugsweise, die vereinzelten Packungen (5) während des formschlüssigen Weitertransportierens der Packungen (5) auf einem sich langsamer als der jeweilige Haltenocken (15) bewegenden Transportmittel (4) steht.

14. Verfahren nach einem der Ansprüche 11 bis 13,
bei dem die vereinzelten Packungen (5) während des formschlüssigen Weitertransportierens der Packungen (5) auf einem sich in Transportrichtung (T) der Packungen (5) bewegenden Transportmittel (4) stehen und dabei, vorzugsweise unter Ausbildung eines Schlupfs, jeweils gegen einen Haltenocken (15) eines sich seitlich der vereinzelten Packungen (5) erstreckenden und sich in Transportrichtung (T) der Packungen (5) bewegenden Transportmittels (14) gedrückt werden.

15. Verfahren nach einem der Ansprüche 11 bis 14,
- bei dem die zu vereinzelnden Packungen (5) seitlich entlang wenigstens einer Zuführführung (8), die Packungen (5) während dem Vereinzeln entlang einer seitlichen Verschiebeführung (12) und/oder die vereinzelten Packungen (5) entlang einer seitlichen Weitergabeführung (9) geführt werden und
- bei dem, vorzugsweise, Schiebeflächen (22) der Schiebemittel (18) zum Verschieben der Packungen (5) wiederholt über wenigstens eine Führungsfläche (10,11) der wenigstens einen Zufühführung (8) und/oder Weitergabeführung (9) greifen und gegen die Packungen (5) stoßen und/oder unter wenigstens eine Führungsfläche (22) der wenigstens einen Führungsschiene, Zufühführung (8) und/oder Weitergabeführung (9) greifen und gegen die Packungen (5) stoßen.
